# EUROPÄISCHE PATENTSCHRIFT

(11) **EP 0 446 693 B1**
(45) Veröffentlichungstag und Bekanntmachung des Hinweises auf die Patenterteilung: **13.09.1995**
(21) Anmeldenummer: 91102693.8
(22) Anmeldetag: 23.02.1991
(51) Int. Cl.: C04B 28/14

(54) **Verfahren zur Herstellung von Gipsfaserplatten, insbesondere von Fussbodenplatten**
Process of manufacturing gypsum fibre boards and floor panels in particular
Procédé de production de plaques de gypse contenant des fibres, en particulier des panneaux de plancher

(30) Priorität: 14.03.1990 DE 4008084
(43) Veröffentlichungstag der Anmeldung: 18.09.1991
(73) Patentinhaber: ProMineral Gesellschaft zur Verwendung von Mineralstoffen mbH, 45141 Essen (DE); SICOWA Verfahrenstechnik für Baustoffe GmbH & Co. KG, D-52072 Aachen (DE)
(72) Erfinder: Koslowski, Thomas, Dr., W-5100 Aachen (DE)
(74) Vertreter: Andrejewski, Walter

(56) Entgegenhaltungen:
- DE-A- 2 437 544
- DE-A- 2 528 304
- DE-A- 2 823 550
- DE-A- 3 216 886
- DE-A- 3 620 154
- CHEMICAL ABSTRACTS, vol. 103, no. 12, 23 September 1985 Columbus, Ohio, USA & JP-A- 6065753 (T.HASEGAWA et al.) 15-04-1985 Seite 275; ref. no. 92140S

## Beschreibung

Die Erfindung betrifft ein Verfahren zur Herstellung von Gipsfaserplatten, insbesondere von Fußbodenplatten, wobei ein feinteiliges Gipsbindemittel und Fasern gemischt sowie die trockene Mischung mit Anmachwasser angemacht wird und wobei die angemachte Mischung zu einem Vorprodukt geformt sowie das Vorprodukt in einer Presse zur Gipsfaserplatte gepreßt wird, die dabei und danach zur Aushärtung gebracht, getrocknet und gegebenenfalls nachbearbeitet wird. - Anmachwasser bezeichnet eine Wassermenge, die zunächst eine ausreichende Hydratisierung des Gipsbindemittels sicherstellt, jedoch darüber hinaus einen abgestimmten Überschuß aufweist. Der Überschuß ist für die Verarbeitung der Mischung und für ein ausreichendes Zusammenhalten des Vorproduktes erforderlich.

Im Rahmen der bekannten Maßnahmen, von denen die Erfindung ausgeht (DE-OS 32 16 886), wird ein besonderes Gipsbindemittel nicht angegeben, zumeist jedoch mit Stuckgips, d. h. Calciumsulfat-Betahalbhydrat, gearbeitet. Die angemachte Mischung wird auf eine Preßunterlage aufgestreut und dadurch zu Vorprodukten geformt, die einen mattenartigen Charakter aufweisen. Die Pressung erfolgt zwischen den Pressenplatten einer Plattenpresse, und zwar umfangsoffen in bezug auf das Vorprodukt und die fertige Gipsfaserplatte. Im einzelnen ist zu diesen bekannten Maßnahmen folgendes zu bemerken: Die aus dem Gipsbindemittel und den Fasern bestehende trockene Mischung wird bei der Zugabe des Anmachwassers verwirbelt. Das Anmachwasser wird in feiner Verteilung in die Verwirbelung eingedüst. Die angemachte Mischung wird vor Beginn des Abbindens auf eine Kunststoffbahn aufgestreut und danach wie beschrieben verpreßt. Der Preßdruck wird so lange aufrechterhalten, bis eine ausreichende Festigkeit erreicht ist. Die Dicke der Gipsfaserplatten wird im Rahmen der bekannten Maßnahmen zumeist durch sogenannte Distanzleisten bestimmt, die auf die jeweils untere Pressenplatte aufgelegt und an zwei Seiten der Vorprodukte angelegt werden, während die beiden anderen Seiten umfangsoffen bleiben. Dieses bewirkt, daß der Druck zu diesen Rändern der Vorprodukte hin abnimmt. Zumindest insoweit ist ein späteres Besäumen unerläßlich. Wird mit Distanzleisten gearbeitet und erfolgt die Streuung nicht ausreichend gleichmäßig, so entstehen beim Verpressen der Vorprodukte zu den fertigen Gipsfaserplatten im Preßgut lokale Druckunterschiede und folglich Gipsfaserplatten mit nicht ausreichend homogenen physikalischen Parametern, wie Dichte und Festigkeit. Außerdem verlassen im Rahmen der bekannten Maßnahmen die Gipsfaserplatten die Presse in Form von schlaffen Rohlingen. Die Rohlinge müssen bei der weiteren Handhabung und Verarbeitung unterstützt werden und sind nicht ausreichend selbsttragend. Diese Nachteile beruhen auch darauf, daß ein hoher Anteil an Fasern und eine relativ große Menge an Anmachwasser verwendet wird. Folglich muß auch Wasser ausgepreßt und abgeführt werden. Im Rahmen der bekannten Maßnahmen läßt sich insbesondere dann, wenn als Gipsbindemittel Stuckgips, d. h. Calciumsulfat-Betahalbhydrat, eingesetzt und mit zellulosehaltigen Fasern gearbeitet wird, nicht verhindern, daß in erheblichem Maße Luft in die angemachte Mischung eingebracht wird, die beim Pressen nur unvollständig entweicht. Auch daraus resultieren Dichteschwankungen. Je dicker die Vorprodukte und damit die gepreßten Gipsfaserplatten sind, desto ausgeprägter sind diese Störungen. Es werden daher im Rahmen der bekannten Maßnahmen regelmäßig Gipsfaserplatten mit einer verhältnismäßig geringen Dicke hergestellt. Hochbeanspruchte Gipsfaserbauteile, insbesondere Fußbodenplatten, werden durch Aufeinanderkleben von mehreren, verhältnismäßig dünnen Gipsfaserplatten hergestellt, und zwar zumeist mit sich kreuzender Orientierung der Fasern, die sich beim Streuen orientiert haben. Das Aufeinanderkleben der Gipsfaserplatten ist aufwendig.

Der Erfindung liegt die Aufgabe zugrunde, das eingangs beschriebene Verfahren so zu führen, daß hochbeanspruchbare Gipsfaserplatten erhalten werden, die sich durch große Homogenität der physikalischen Parameter auszeichnen, und zwar auch dann, wenn Gipsfaserplatten großer Dicke hergestellt werden. Die hergestellten Gipsfaserplatten sollen praktisch keiner Nachbehandlung bedürfen.

Zur Lösung dieser Aufgabe lehrt die Erfindung, daß mit einem Gipsbindemittel gearbeitet wird, wie im Anspruch 1 beschrieben, welches aus zumindest 60 Gew.% Calciumsulfat-Alphahalbhydrat und außerdem bis zu 35 Gew.% Calciumsulfat-Betahalbhydrat sowie gegebenenfalls im Rest aus feinteiligen inerten Bestandteilen besteht, daß 100 Gew.Teile dieser Bindemittelmischung mit maximal 20 Gew.Teilen Fasern gemischt werden, daß diese Mischung mit dem Anmachwasser preßwasserfrei angemacht wird, und daß die angemachte Mischung in eine umfangsgeschlossene Form eingebracht sowie in dieser zu dem Vorprodukt geformt und in der umfangsgeschlossenen Form formgenau so gepreßt wird, daß die fertige Gipsfaserplatte eine Rohdichte von zumindest 1,5 g/cm³ aufweist. Preßwasserfrei bedeutet eine Einstellung der Anmachwassermenge so, daß beim Preßvorgang kein Wasser abläuft. Vorzugsweise wird mit etwa 6 Gew.Teilen zellulosehaltiger Fasern auf 100 Gew.Teile der trockenen Bindemittelmischung gearbeitet. Vorzugsweise wird fernerhin so gepreßt; daß die Rohdichte der fertigen Gipsfaserplatten über 1,5 g/cm³, z. B. bei 1,6 oder 1,7 g/cm³ liegt. Es versteht sich, daß das Gipsbindemittel durch Zusatzstoffe so eingestellt wird, daß eine vorzeitige Abbindung und Aushärtung nicht eintritt.

Im Rahmen der Erfindung wirken die Fasern gleichsam als Bewehrungen, die die Zugfestigkeit und Biegefestigkeit der Gipsfaserplatten erhöhen. Nach bevorzugter Ausführungsform der Erfindung werden dem Gipsbindemittel zellulosehaltige Fasern beigemischt. Insbesondere können als zellulosehaltige Fasern Papierfasern eingesetzt werden. In diesem Zusammenhang lehrt die Erfindung, daß die Papierschnitzel mit zumindest einem Teil des Gipsbindemittels zusammengemahlen und dadurch die Papierschnitzel zerfasert werden. Man erreicht so mischungsfreudige Fasern und leicht eine sehr homogene Mischung. Außerdem können in den genannten 20 Gew.Teilen Fasern verstärkende Bewehrungsfasern enthalten sein, z. B. Kunststoffasern, Mineralfasern und/oder Metallfasern, jedoch nur bis zu 5 Gew.Teilen.

Erfindungsgemäß wird ein besonderes Gipsbindemittel eingesetzt. Auf dieses besondere Gipsbindemittel wird die Menge an Fasern so abgestimmt, daß hochbeanspruchbare Gipsfaserplatten entstehen, die eine große Dicke aufweisen können und sich durch sehr homogene physikalische Parameter und hohe Belastbarkeit auszeichnen. Die Dicke der Gipsfaserplatte kann, einschichtig, 50 mm und mehr betragen. Die aus den beschriebenen Vorteilen resultierende hohe Qualität, ebenso wie die Tatsache, daß nur eine geringe Nachbearbeitung erforderlich ist, beruhen darauf, daß in umfangsgeschlossenen Formen gepreßt wird, und zwar so, daß die fertige Gipsfaserplatte eine Rohdichte von zumindest 1,5 g/cm³ aufweist. Störende Lufteinflüsse werden nicht beobachtet. Das Anmachwasser wird mengenmäßig so eingestellt, daß beim Pressen des Vorproduktes kein Wasser freigesetzt wird und abgeführt werden muß.

Im einzelnen bestehen im Rahmen der Erfindung mehrere Möglichkeiten der weiteren Ausbildung des Verfahrens. Bewährt hat es sich, mit einem Gipsbindemittel zu arbeiten, welches das Calciumsulfat-Alphahalbhydrat in Fraktionen unterschiedlicher Mahlfeinheit enthält. Auf diese Weise läßt sich u. a. die Festigkeit der Gipsfaserplatten beeinflussen. Im Rahmen der Erfindung liegt es, der Mischung aus dem Gipsbindemittel und Fasern feinkörnige Leichtzuschlagstoffe, wie z. B. Perlite oder Vermiculite, beizumischen. Ohne Störung kann dem Gipsbindemittel als inert wirkender Bestandteil Schleifabfall in einer Menge von bis zu 5 Gew.% beigegeben werden. Es empfiehlt sich, die trockene Mischung aus dem Gipsbindemittel und den Fasern in einem Durchlaufmischer mit dem Anmachwasser zu vermischen. Dem Anmachwasser können Additive für die Beeinflussung der Reaktionsgeschwindigkeit des Gipsbindemittels beigegeben werden. Diese können aber auch dem feinteiligen Gipsbindemittel beigegeben werden. Im allgemeinen wird man die Vorprodukte in der umfangsgeschlossenen Form mit einem Preßdruck von etwa 10 bis 25 N/mm², vorzugsweise 12 bis 20 N/mm², verpressen. Nach bevorzugter Ausführungsform der Erfindung wird beim Pressen so gearbeitet, daß das Vorprodukt entlüftet und bis zu einem praktisch rückfederungsfreien Endzustand verdichtet wird. Das gelingt insbesondere dann auf einfache Weise, wenn die Vorprodukte in der umfangsgeschlossenen Preßform einer Impulsverpressung unterworfen werden.

Erfindungsgemäß wird eine faserarme Mischung verwendet. Diese wird mit hohen Preßdrücken zu Gipsfaserplatten gepreßt, die als Gipsfaserplattenrohlinge die umfangsgeschlossene Form verlassen, beispielsweise aus diesen ausgestoßen werden können und bereits manipulierbar und stapelbar sind.

Im Rahmen der Erfindung kann Calciumsulfat-Alphahalbhydrat mit unterschiedlichen Mahlfeinheiten verwendet werden. Die folgenden vier Mahlfeinheiten sind zur Herstellung von Gipsfaserplatten nach dem eingangs beschriebenen Verfahren allein oder in Kombination geeignet:

| | | |
|---|---|---|
| Mahlfeinheit 1) | Rückstand auf 50 µm | 0 % |
| | Rückstand auf 40 µm | 1 - 2 % |
| | Rückstand auf 32 µm | 7 - 11 % |
| | spez. Oberfläche (Blaine) | 4200 cm²/g |
| Mahlfeinheit 2) | Rückstand auf 50 µm | 1 - 3 % |
| | Rückstand auf 40 µm | 6 - 10 % |
| | Rückstand auf 32 µm | 20 - 26 % |
| | spez. Oberfläche (Blaine) | 3900 cm²/g |
| Mahlfeinheit 3) | Rückstand auf 50 µm | 12 - 16 % |
| | Rückstand auf 40 µm | 22 - 24 % |
| | Rückstand auf 32 µm | 35 - 41 % |
| | spez. Oberfläche (Blaine) | 3000 cm²/g |
| Mahlfeinheit 4) | Rückstand auf 50 µm | 20 - 25 % |
| | Rückstand auf 40 µm | 35 - 41 % |
| | Rückstand auf 32 µm | 50 - 58 % |
| | spez. Oberfläche (Blaine) | 2300 cm²/g |

Bevorzugt wird mit Calciumsulfat-Alphahalbhydrat der Mahlfeinheit 1) gearbeitet. Das verhältnismäßig grobkörnige Calciumsulfat-Alphahalbhydrat begünstigt im Rahmen der Erfindung die Entlüftung. Der dem Gipsbindemittel zugesetzte Anteil an Calciumsulfat-Betahalbhydrat bildet den Feinanteil des Gipsbindemittels und füllt zumindest teilweise die Hohlräume zwischen den gröberen Calciumsulfat-Alphahalbhydratteilchen. Diese Maßnahme dient der Wasserrückhaltung beim Verpressen, unterdrückt also das Austreten von Preßwasser. Der Anteil an Calciumsulfat-Betahalbhydrat wird in Abstimmung mit dem Anmachwasser so eingestellt, daß Lufteinschlüsse gering gehalten werden. Im Rahmen der Erfindung liegt es, der Mischung die Benetzbarkeit und das Wasserrückhaltevermögen verbessernde Mittel wie Tenside, Methylzellulose, Azetatdispersionen oder dergleichen zuzusetzen. Neben dem Schleifabfall können in Grenzen auch in diesem Verfahren inert wirkende Bestandteile, wie Hüttensand, Tonerde, Zement oder dergleichen, beigegeben werden, jedoch in geringen Mengen, da diese Zusätze die Festigkeit senken. Solche Zusätze wirken sich je nach dem Verwendungszweck der Gipsfaserplatten im Einsatz vorteilhaft aus.

Im Rahmen der Erfindung liegt es, in die Vorprodukte Bewehrungselemente in Form von Bewehrungsgittern und/oder Bewehrungsgeflecht, auch in Form von Stahlmatten, einzubringen.

Im folgenden wird die Erfindung anhand einer Zeichnung, die das Schema der Anlage für die Durchführung eines erfindungsgemäßen Verfahrens darstellt, ausführlicher erläutert.

In einem Vorratsbehälter 1 ist Gipsbindemittel gelagert, das bodenseitig aus dem Vorratsbehälter 1 abgeführt und in einen Schneckenförderer 2 eingespeist werden kann, aus dem es über eine Wägeeinrichtung 3 an einen Mischer 4 in dosierter Menge abgegeben wird. Ferner ist ein Vorratsbehälter 5 für Schleifabfall fertiger Gipsfaserplatten vorgesehen, der an einen Schneckenförderer 6 und von dort über eine Wägeeinrichtung 7 an den Mischer 4 abgegeben werden kann.

Zusätzlich ist eine Altpapieraufbereitung 8 vorgesehen, von der voraufbereitetes Altpapier über eine Wäge- und Dosiereinrichtung 9 an eine Mühle 10 abgegeben wird. Dort erfolgt eine Zerfaserung zu Papierfasern. Der Mühle 10 wird ferner Gipsbindemittel aus einem Vorratsbehälter 11 über einen Schneckenförderer 12 und eine Wägeeinrichtung 13 zugeführt, so daß das Altpapier mit einem Teil des Gipsbindemittels in der Mühle 10 vermahlen und dann mit dem übrigen Gipsbindemittelanteil im Mischer 4 gemischt wird.- Ferner ist eine Aufbereitung 14 für verstärkende Fasern, beispielsweise Glasfasern, vorgesehen, die über eine Dosiereinrichtung 15 ebenfalls in vorbestimmter Gewichtsmenge dem Mischer 4 zugeführt werden.

Der Mischer 4 arbeitet diskontinuierlich und gibt die aus Gipsbindemittel, zellulosehaltigen Fasern und gegebenenfalls verstärkenden Fasern bestehende Mischung an einen Vorratsbehälter 16, von dem die Mischung in dosierter Menge/Zeiteinheit an zwei parallele Durchlaufmischer 17 abgegeben wird, in die das Anmachwasser aus einem Behälter 18 in der vorgegebenen Menge eingegeben wird. Das Anmachwasser kann zusätzlich Additive, beispielsweise zum Beschleunigen der Reaktionsgeschwindigkeit des Gipsbindemittels oder zur Erhöhung der Benetzbarkeit der Mischung, enthalten.

Die in den Durchlaufmischern 17 befeuchtete Mischung wird jeweils in einen Füllkasten 19 gegeben, der nach dem Erreichen des vorgegebenen Füllgewichtes in eine Presse 20 eingeführt wird und dort die befeuchtete Mischung in den Pressenformschacht übergibt. Dadurch entsteht das Vorprodukt. Die Pressen 20 besitzen insbesondere zwei Stempel, die von oben und von unten auf das in der Form befindliche Vorprodukt mit einem Preßdruck von 10 bis 25 N/mm², insbesondere 12 bis 20 N/mm², einwirken. Insbesondere erfolgt die Verpressung als Impulsverpressung in Form von mindestens zwei schnell aufeinanderfolgenden Preßvorgängen, zwischen denen eine Entlüftung stattfinden kann. Jedenfalls wird das Vorprodukt in der Form derart gepreßt, daß die in der Mischung befindliche Luft insoweit entweichen kann, daß nach dem Pressen keine Rückfederung eintritt. Die Preßstempel können hierzu auch mit entsprechenden Luftabführdüsen, die z. B. siebartig ausgebildet und gegebenenfalls an eine Unterdruckquelle angeschlossen sind, versehen sein.

Der auf diese Weise hergestellte kanten- und eigenstabile Gipsfaserplattenrohling 21 wird nach dem Entformen von einem Umsetzer auf einem Aushärteband 22 abgelegt, auf dem er so lange verbleibt, bis das Bindemittel ausgehärtet ist. Dies dauert etwa 25 min. Nach dem Aushärten enthalten die Gipsfaserplattenrohlinge ca. 4 Gew.% nicht chemisch gebundenes Wasser.

Die ausgehärteten Gipsfaserplattenrohlinge 21 werden einem Trockner zugeführt. Hierbei wird insbesondere ein Hochfrequenztrockner bevorzugt, der zusätzlich mit Umluft zum Abführen der Feuchtigkeit arbeiten kann. Der Hochfrequenztrockner läßt sich wegen des geringen Restfeuchtigkeitsgehaltes der Gipsfaserplattenrohlinge von ca. 4 Gew.% einsetzen und führt zu schneller Trocknung.

Vom Trockner gelangen die Gipsfaserplattenrohlinge in eine Nachbearbeitungsstation, in der bei Bedarf die Kanten und wenigstens eine Oberfläche durch Schleifen auf die gewünschte Maßgenauigkeit gebracht werden können. Der bei der Nachbearbeitung anfallende Schleifabfall gelangt dann in den Vorratsbehälter 5, während die fertigen Platten palettiert und zum Versand verpackt werden können. Die hergestellten Gipsfaserplatten sind insbesondere als Fußbodenplatten für Doppelböden, aber auch als Unterbodenplatten, Bauplatten für den Innenausbau oder dergleichen einsetzbar.

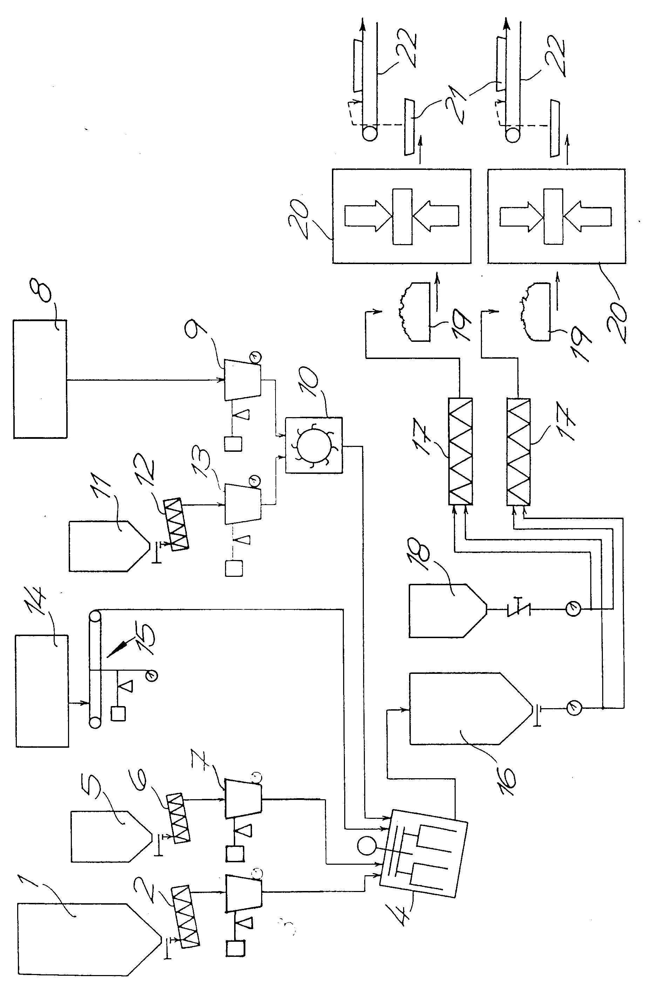

## Patentansprüche

1. Verfahren zur Herstellung von Gipsfaserplatten, insbes. zur Herstellung von Fußbodenplatten, mit den folgenden Verfahrensschritten:
1.1) Es wird eine Bindemittelmischung aus zumindest 60 Gew.% körnigem Calciumsulfat-Alphahalbhydrat, bis zu 35 Gew.% von gegenüber der Körnung des Calciumsulfat-Alphahalbhydrats feinkörnigerem Calciumsulfat-Betahalbhydrat, Rest feinteilige inerte Bestandteile, so hergestellt, daß das feinkörnige Calciumsulfat-Betahalbhydrat zumindest teilweise die Hohlräume zwischen dem groberen Calciumsulfat-Alphahalbhydrat füllt,
1.2) 100 Gew.Teile der Bindemittelmischung gemäß 1.1) werden mit max. 20 Gew.Teilen von als Bewehrung wirkenden Fasern gemischt,
1.3) die Mischung gemäß 1.2) wird mit Anmachwasser preßwasserfrei angemacht,
1.4) die mit dem Anmachwasser angemachte Mischung wird in eine umfangsgeschlossene Form eingebracht und darin zu einem Vorprodukt geformt,
wobei das Vorprodukt in der umfangsgeschlossenen Form beim Pressen entlüftet und zu einer praktisch rückfederungsfreien Gipsfaserplatte der Mindestdichte von 1,5 g/cm³ verpreßt wird.

2. Verfahren nach Anspruch 1, dadurch gekennzeichnet, daß dem Gipsbindemittel zellulosehaltige Fasern beigemischt werden.

3. Verfahren nach Anspruch 2, dadurch gekennzeichnet, daß als zellulosehaltige Fasern Papierfasern eingesetzt werden.

4. Verfahren nach einem der Ansprüche 2 oder 3, dadurch gekennzeichnet, daß Papierschnitzel mit zumindest einem Teil des Gipsbindemittels zusammen gemahlen und dadurch die Papierschnitzel zerfasert werden.

5. Verfahren nach einem der Ansprüche 1 bis 4, dadurch gekennzeichnet, daß dem der Bindemittelmischung zugemischten Faseranteil bis zu 5 Gew.Teile verstärkende Bewehrungsfasern beigemischt werden.

6. Verfahren nach einem der Ansprüche 1 bis 5, dadurch gekennzeichnet, daß mit einem Gipsbindemittel gearbeitet wird, welches das Calciumsulfat-Alphahalbhydrat in Fraktionen unterschiedlicher Mahlfeinheit enthält.

7. Verfahren nach einem der Ansprüche 1 bis 6, dadurch gekennzeichnet, daß der Mischung aus dem Gipsbindemittel und den Fasern feinkörnige Leichtzuschlagstoffe, wie Perlite oder geblähte Vermiculite, beigemischt werden.

8. Verfahren nach einem der Ansprüche 1 bis 7, dadurch gekennzeichnet, daß das Gipsbindemittel als inerten Bestandteil bis zu 5 Gew.% Schleifabfall von fertigen Gipsfaserplatten enthält.

9. Verfahren nach einem der Ansprüche 1 bis 8, dadurch gekennzeichnet, daß die trockene Mischung in einem Durchlaufmischer mit dem Anmachwasser vermischt wird.

10. Verfahren nach einem der Ansprüche 1 bis 9, dadurch gekennzeichnet, daß dem Anmachwasser Additive für die Beeinflussung der Reaktionsgeschwindigkeit des Gipsbindemittels beigegeben werden.

11. Verfahren nach einem der Ansprüche 1 bis 10, dadurch gekennzeichnet, daß das Vorprodukt in der umfangsgeschlossenen Form mit einem Preßdruck von 10 bis 25 N/mm², vorzugsweise 12 bis 20 N/mm² gepreßt wird.

12. Verfahren nach einem der Ansprüche 1 bis 11, dadurch gekennzeichnet, daß das Vorprodukt in der umfangsgeschlossenen Preßform einer Impulsverpressung unterworfen wird.

## Claims

1. A process for producing gypsum fibre boards, particularly for producing floor panels, having the following process steps:
1.1) A binder mixture comprising at least 60 weight % of granular calcium sulphate alpha-hemihydrate, up to 35 weight % of calcium sulphate beta-hemihydrate which is finer-grained compared with the granularity of the calcium sulphate alpha-hemihydrate, balance finely-divided inert constituents, is produced so that the fine-grained calcium sulphate beta-hemihydrate at least partially fills the interstices between the coarser calcium sulphate alpha-hemihydrate,
1.2) 100 parts by weight of the binder mixture according to 1.1) are mixed with a maximum of 20 parts by weight of fibres acting as a reinforcement,
1.3) the mixture according to 1.2) is puddled with mixing water free from pressing water,
1.4) the mixture puddled with the mixing water is introduced into a peripherally closed mould and moulded therein to form a preliminary product,
wherein on pressing in the peripherally closed mould the preliminary product is de-aired and compacted to form a gypsum fibre board with a minimum density of 1.5 g/cm³ which is practically free from spring-back.

2. A process according to claim 1, characterised in that fibres containing cellulose are admixed with the gypsum binder.

3. A process according to claim 2, characterised in that paper fibres are used as the fibres containing cellulose.

4. A process according to either one of claims 2 or 3, characterised in that paper shreddings are ground together with at least part of the gypsum binder and the paper shreddings are thereby pulped.

5. A process according to any one of claims 1 to 4, characterised in that up to 5 parts by weight of strengthening reinforcing fibres are admixed with the fibre fraction admixed with the binder mixture.

6. A process according to any one of claims 1 to 5, characterised in that a gypsum binder is employed which contains calcium sulphate alpha-hemihydrate in fractions of different grinding fineness.

7. A process according to any one of claims 1 to 6, characterised in that fine-grained light aggregate materials, such as perlite or expanded vermiculite, are admixed with the mixture comprising the gypsum binder and the fibres.

8. A process according to any one of claims 1 to 7, characterised in that the gypsum binder contains up to 5 weight % swarf from finished gypsum fibre boards as an inert constituent.

9. A process according to any one of claims 1 to 8, characterised in that the dry mixture is mixed with the mixing water in a continuous mixer.

10. A process according to any one of claims 1 to 9, characterised in that additives for influencing the reaction rate of the gypsum binder are added to the mixing water.

11. A process according to any one of claims 1 to 10, characterised in that the preliminary product is pressed in the peripherally closed mould at a compaction pressure of 10 to 25 N/mm², preferably 12 to 20 N/mm².

12. A process according to any one of claims 1 to 11, characterised in that the preliminary product is subjected to pulsed compaction in the peripherally closed mould.

## Revendications

1. Procédé pour fabriquer des plaques de plâtre contenant des fibres, notamment des carreaux de revêtement de sol, comprenant les étapes suivantes :
1.1) on forme un mélange de liant à partir d'au moins 60 % en poids de sulfate de calcium semi-hydraté de type alpha, et jusqu'à 35 % en poids de sulfate de calcium semi-hydraté de type bêta à grains fins par rapport à la granulation du sulfate de calcium semi-hydraté de type alpha, le reste étant formé par des constituants inertes finement divisés, de telle sorte que le sulfate de calcium semi-hydraté de type bêta à grains fins remplit au moins partiellement les cavités que laisse subsister le sulfate de calcium semi-hydraté de type alpha, qui est plus grossier,
1.2) on mélange 100 parties en poids du mélange de liant selon 1.1) à au maximum 20 parties en poids de fibres agissant en tant qu'armaturage,
1.3) on gâche le mélange selon 1.2) avec de l'eau à gâcher, sans aucune eau de pressage,
1.4) on introduit le mélange, gâché avec l'eau à gâcher, dans un moule fermé au niveau de son pourtour et on le moule pour former une ébauche,
l'ébauche étant désaérée dans le moule, qui est fermé sur son pourtour, lors du pressage et étant comprimée pour former une plaque de plâtre contenant des fibres, ne présentant pratiquement aucun retour élastique, et possédant la densité minimale de 1,5 g/cm³.

2. Procédé selon la revendication 1, caractérisé en ce qu'on mélange des fibres contenant de la cellulose au liant du plâtre.

3. Procédé selon la revendication 2, caractérisé en ce qu'on utilise des fibres de papier comme fibres contenant de la cellulose.

4. Procédé selon l'une des revendications 2 ou 3, caractérisé en ce qu'on réunit en les broyant des rognures de papier avec au moins une partie du liant pour le plâtre et qu'on triture de ce fait les rognures de papier.

5. Procédé selon l'une des revendications 1 à 4, caractérisé en ce qu'on mélange jusqu'à 5 parties en poids de fibres de renforcement formant armaturage au pourcentage de fibres mélangées au mélange du liant.

6. Procédé selon l'une des revendications 1 à 5, caractérisé en ce qu'on travaille avec un liant pour le plâtre, qui contient du sulfate de calcium semi-hydraté de type alpha sous la forme de fractions possédant des finesses de broyage différentes.

7. Procédé selon l'une des revendications 1 à 6, caractérisé en ce qu'on ajoute des additifs légers à grains fins, comme de la perlite ou de la vermiculite expansée, au mélange formé du liant pour le plâtre et des fibres.

8. Procédé selon l'une des revendications 1 à 7, caractérisé en ce que le liant pour le plâtre contient, en tant que constituant inerte, jusqu'à 5 % en poids de résidus de meulage de plaques terminées de plâtre contenant des fibres.

9. Procédé selon l'une des revendications 1 à 8, caractérisé en ce qu'on mélange de l'eau à gâcher au mélange sec dans un mélangeur continu.

10. Procédé selon l'une des revendications 1 à 9, caractérisé en ce qu'on ajoute, à l'eau à gâcher, des additifs pour influer sur la vitesse de réaction du liant pour le plâtre.

11. Procédé selon l'une des revendications 1 à 10, caractérisé en ce qu'on presse l'ébauche dans le moule fermé sur son pourtour, avec une pression comprise entre 10 et 25 N/mm² et de préférence entre 12 et 20 N/mm².

12. Procédé selon l'une des revendications 1 à 11, caractérisé en ce qu'on soumet l'ébauche dans le moule de pressage fermé sur son pourtour, à un pressage impulsionnel.
